# EUROPEAN PATENT APPLICATION

(11) **EP 4 369 247 A1**
(43) Date of publication of application: **15.05.2024**
(21) Application number: 22837030.0
(22) Date of filing: 07.07.2022
(51) Int. Cl.: G06K 7/10, H04N 17/00

(54) **FOCUSING METHOD AND APPARATUS, AND STORAGE MEDIUM**

(30) Priority: 08.07.2021 CN 202110771982
(71) Applicant: Hangzhou Hikrobot Co., Ltd., Hangzhou, Zhejiang 310051 (CN)
(72) Inventor: JIN, Yiming, Hangzhou, Zhejiang 310051 (CN)
(74) Representative: Epping - Hermann - Fischer
(86) International application number: PCT/CN2022/104462
(87) International publication number: WO 2023/280285

(57) **Abstract**

The embodiments of the present application disclose a focusing method, apparatus, and storage medium, belonging to the technical field of image acquisition. In the embodiments of the present application, automatic focusing is performed according to the image sharpness scores and code reading scores of the lens of the code reading camera at different positions. Since the code reading scores can characterize the code reading success rate of the code reading camera, the embodiments of the present application actually evaluates the focusing effect of the lens at different positions by combining the image sharpness and code reading effect of the code reading camera, to determine the optimal position of the lens and further complete automatic focusing. This not only ensures the sharpness of the image acquired by the code reading camera after focusing is completed, but can also ensure the code reading success rate of the code reading camera after focusing is completed.

## Description

The present application requires the priority to a Chinese patent application No. 202110771982.4 filed with the China National Intellectual Property Administration on July 08, 2021 and entitled "Focusing method, apparatus, and storage medium", which is incorporated herein by reference in its entirety.

### Technical Field

This application relates to the technical field of image acquisition, in particular to a focusing method, apparatus, and storage medium.

### Background

Currently, code reading cameras used to read two-dimensional codes and bar codes are widely used in industrial scenarios such as express logistics. When reading a code by using a code reading camera, a distance from the code reading camera to a working plane often changes. In this case, automatic focusing can usually be used to quickly focus the code reading camera onto the working plane.

In related technologies, during the automatic focusing of the code reading camera, every time the lens of the code reading camera moves to a position, a frame of image is acquired at that position. Afterwards, an image sharpness score of the acquired image is calculated using the image autocorrelation method or the image high-frequency component method. In this way, after obtaining image sharpness scores of the lens of the code reading camera at multiple positions, a position with the highest image sharpness score is used as an optimal position of the lens, and then the lens is driven to move to the optimal position so as to complete automatic focusing.

### Summary

The embodiments of the application provide a focusing method, apparatus, and storage medium, which not only ensures the sharpness of the focused code reading camera, but also ensures a success rate of code reading after focusing. The technical solutions are as follows:
On the one hand, a focusing method is provided, including:
obtaining image sharpness scores and code reading scores of a lens of a code reading camera at multiple positions, wherein the code reading scores are configured to characterize a code reading success rate of the code reading camera;
determining an optimal position of the lens according to the image sharpness scores and the code reading scores at the multiple positions; and
focusing according to the optimal position of the lens.

In one possible implementation, determining the optimal position of the lens according to the image sharpness scores and the code reading scores at the multiple positions, includes:
determining at least one rough position of the lens from the multiple positions according to the image sharpness scores at the multiple positions;
determining the optimal position of the lens according to the at least one rough position of the lens and the code reading scores at the multiple positions; and
focusing according to the optimal position of the lens.

In one possible implementation, obtaining the image sharpness scores and the code reading scores of the lens of the code reading camera at the multiple positions, includes:
obtaining an image sharpness score and a code reading score of the lens at a search starting position, wherein the search starting position is a travel starting position or a travel ending position of the lens, the travel starting position of the lens is a position where a vertical distance between the lens and a target surface of an object whose code is to be read is maximum, and the travel ending position of the lens is a position where the vertical distance between the lens and the target surface is minimum;
controlling the lens to move from the search starting position along a specified search direction with a specified search step size, wherein when the search starting position is the travel starting position of the lens, the specified search direction refers to a direction from the travel starting position to the travel ending position of the lens; and when the search starting position is the travel ending position of the lens, the specified search direction refers to a direction from the travel ending position to the travel starting position of the lens; and
every time the lens moves the specified search step size, obtaining an image sharpness score and a code reading score after movement of the lens.

In one possible implementation, determining the at least one rough position of the lens from the multiple positions according to the image sharpness scores at the multiple positions, includes:
during movement of the lens along the specified search direction, if already obtained multiple image sharpness scores show a trend of first increasing and then decreasing as the lens moves and a decrease ratio of a most recently obtained image sharpness score relative to a maximum value among the multiple image sharpness scores reaches a first threshold, determining whether a code reading score at a first position corresponding to the maximum value among the multiple image sharpness scores is greater than a second threshold; and
if the code reading score at the first position is greater than the second threshold, taking the first position as the rough position of the lens.

In one possible implementation, determining the at least one rough position of the lens from the multiple positions according to the image sharpness scores at the multiple positions, includes:
drawing a relationship curve between the multiple positions and the image sharpness scores at the multiple positions;
obtaining at least one image sharpness score peak from the relationship curve;
from at least one position corresponding to the at least one image sharpness score peak, determining a second position where a corresponding code reading score is greater than a second threshold;
taking the determined second position as the at least one rough position of the lens.

In one possible implementation, determining the optimal position of the lens according to the at least one rough position of the lens and the code reading scores at the multiple positions, includes:
determining a candidate search interval corresponding to each rough position, wherein the candidate search interval is a lens position interval centered on the rough position;
determining a local maximum code reading score within each candidate search interval from the code reading scores corresponding to respective positions included in the candidate search interval; and
determining the optimal position of the lens according to the local maximum code reading score within each candidate search interval.

In one possible implementation, determining the optimal position of the lens according to the local maximum code reading score within each candidate search interval, includes:
if there is one candidate search interval and there is one position corresponding to the local maximum code reading score within the candidate search interval, taking the position corresponding to the local maximum code reading score within the candidate search interval as the optimal position of the lens;
if there is one candidate search interval and there are multiple positions corresponding to the local maximum code reading score within the candidate search interval, selecting a third position closest to a rough position corresponding to the candidate search interval from the multiple positions corresponding to the local maximum code reading score within the candidate search interval, and taking the third position as the optimal position of the lens; and
if there are multiple candidate search intervals, taking a maximum value among local maximum code reading scores within the multiple candidate search intervals as a global maximum value; if there is one position corresponding to the global maximum value, taking the position corresponding to the global maximum value as the optimal position of the lens; if there are multiple positions corresponding to the global maximum value, determining a distance between each position of the multiple positions corresponding to the global maximum value and a rough position corresponding to a candidate search interval where the position itself is located, and taking a position with a smallest distance from the rough position corresponding to the candidate search interval where the position itself is located as the optimal position of the lens.

In one possible implementation, focusing according to the optimal position of the lens, includes:
determining a focusing movement direction and a movement distance of the lens according to the optimal position and a current position of the lens; and
driving the lens to move to the optimal position of the lens according to the focusing movement direction and the movement distance of the lens to complete focusing.

On the other hand, a focusing apparatus is provided, including:
an obtaining module, configured for obtaining image sharpness scores and code reading scores of a lens of a code reading camera at multiple positions, wherein the code reading scores are configured to characterize a code reading success rate of the code reading camera;
a determining module, configured for determining an optimal position of the lens according to the image sharpness scores and the code reading scores at the multiple positions; and
a focusing module, configured for focusing according to the optimal position of the lens.

In one possible implementation, the determining module includes:
a first determining module, configured for determining at least one rough position of the lens from the multiple positions according to the image sharpness scores at the multiple positions; and
a second determining module, configured for determining the optimal position of the lens according to the at least one rough position of the lens and the code reading scores at the multiple positions.

In one possible implementation, the obtaining module mainly for:
the obtaining module is mainly configured for: obtaining an image sharpness score and a code reading score of the lens at a search starting position, wherein the search starting position is a travel starting position or a travel ending position of the lens, the travel starting position of the lens is a position where a vertical distance between the lens and a target surface of an object whose code is to be read is maximum, and the travel ending position of the lens is a position where the vertical distance between the lens and the target surface is minimum;
controlling the lens to move from the search starting position along a specified search direction with a specified search step size, wherein when the search starting position is the travel starting position of the lens, the specified search direction refers to a direction from the travel starting position to the travel ending position of the lens; and when the search starting position is the travel ending position of the lens, the specified search direction refers to a direction from the travel ending position to the travel starting position of the lens; and
every time the lens moves the specified search step size, obtaining an image sharpness score and a code reading score after movement of the lens.

In one possible implementation, the first determining module is mainly configured for:
during movement of the lens along the specified search direction, if already obtained multiple image sharpness scores show a trend of first increasing and then decreasing as the lens moves and a decrease ratio of a most recently obtained image sharpness score relative to a maximum value among the multiple image sharpness scores reaches a first threshold, determining whether a code reading score at a first position corresponding to the maximum value among the multiple image sharpness scores is greater than a second threshold; and
if the code reading score at the first position is greater than the second threshold, taking the first position as the rough position of the lens.

In one possible implementation, the first determining module is mainly configured for:
drawing a relationship curve between the multiple positions and the image sharpness scores at the multiple positions;
obtaining at least one image sharpness score peak from the relationship curve;
from at least one position corresponding to the at least one image sharpness score peak, determining a second position where a corresponding code reading score is greater than a second threshold;
taking the determined second position as the at least one rough position of the lens.

In one possible implementation, the second determining module is mainly configured for:
determining a candidate search interval corresponding to each rough position, wherein the candidate search interval is a lens position interval centered on the rough position;
determining a local maximum code reading score within each candidate search interval from the code reading scores corresponding to respective positions included in the candidate search interval; and
determining the optimal position of the lens according to the local maximum code reading score within each candidate search interval.

In one possible implementation, the second determining module is mainly further configured for:
if there is one candidate search interval and there is one position corresponding to the local maximum code reading score within the candidate search interval, taking the position corresponding to the local maximum code reading score within the candidate search interval as the optimal position of the lens;
if there is one candidate search interval and there are multiple positions corresponding to the local maximum code reading score within the candidate search interval, selecting a third position closest to a rough position corresponding to the candidate search interval from the multiple positions corresponding to the local maximum code reading score within the candidate search interval, and taking the third position as the optimal position of the lens; and
if there are multiple candidate search intervals, taking a maximum value among local maximum code reading scores within the multiple candidate search intervals as a global maximum value; if there is one position corresponding to the global maximum value, taking the position corresponding to the global maximum value as the optimal position of the lens; if there are multiple positions corresponding to the global maximum value, determining a distance between each position of the multiple positions corresponding to the global maximum value and a rough position corresponding to a candidate search interval where the position itself is located, and taking a position with a smallest distance from the rough position corresponding to the candidate search interval where the position itself is located as the optimal position of the lens.

In one possible implementation, the focusing module is mainly configured for:
determining a focusing movement direction and a movement distance of the lens according to the optimal position and a current position of the lens; and
driving the lens to move to the optimal position of the lens according to the focusing movement direction and the movement distance of the lens to complete focusing.

On the other hand, a focusing apparatus is provided, including a controlling unit, a motor, a lens, and a moving mechanism;
wherein the moving mechanism drives the lens to move in a direction perpendicular to the lens surface of the lens; and
the controlling unit is connected to the motor, and is configured to carry out the any method above to control the motor to drive the moving mechanism which in turn drives the lens to move, so as to complete focusing.

On the other hand, a computer device is provided, including a processor, a communication interface, a memory and a communication bus; wherein the processor, the communication interface and the memory communicate with each other through the communication bus, and the memory is configured to store computer programs, and the processor is configured to execute programs stored on the memory to carry out the aforementioned focusing method.

In the other aspect, a computer-readable storage medium is provided, having computer programs stored therein, wherein the computer programs when executed by a processor, carry out the aforementioned focusing method.

In the other aspect, a computer program product containing instructions is provided, wherein the instructions, when run on a computer, causes the computer to perform the carry out the aforementioned focusing method.

The technical solutions provided in the present application can at least bring about the following beneficial effects:
In the embodiments of the present application, automatic focusing is performed according to the image sharpness scores and code reading scores of the lens of the code reading camera at different positions. Since the code reading scores can characterize the code reading success rate of the code reading camera, the embodiments of the present application actually evaluates the focusing effect of the lens at different positions by combining the image sharpness and code reading effect of the code reading camera, to determine the optimal position of the lens and further complete automatic focusing. This not only ensures the sharpness of the image acquired by the code reading camera after focusing is completed, but can also ensure the code reading success rate of the code reading camera after focusing is completed.

### Brief Description of the Drawings

In order to more clearly describe the technical solutions of embodiments of the present application and the prior art, accompanying drawings that need to be used in the embodiments and the prior art will be briefly described below. Obviously, accompanying drawings described below are for only some of embodiments of the present application; those skilled in the art may also obtain other accompanying drawings based on these accompanying drawings without any creative efforts.
Figure 1 is a system architecture diagram to which a focusing method provided in an embodiment of the present application relates;
Figure 2 is a schematic structure diagram of a focusing apparatus provided in an embodiment of the present application;
Figure 3a is a flow chart of a focusing method provided in an embodiment of the present application;
Figure 3b is a flow chart of another focusing method provided in an embodiment of the present application;
Figure 4 is a graph of image sharpness score provided by an embodiment of the present application;
Figure 5a is a schematic structure diagram of another focusing apparatus provided in an embodiment of the present application;
Figure 5b is a schematic structure diagram of yet another focusing apparatus provided in an embodiment of the present application;
Figure 6a is a schematic structure diagram of a computer device provided in an embodiment of the present application;
Figure 6b is a schematic structure diagram of another computer device provided in an embodiment of the present application.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art without any creative efforts fall into the scope of protection of the present application.

Before providing a detailed explanation of the focusing method provided in embodiments of the present application, the application scenarios of the embodiments of the present application will be introduced first.

The focusing method provided in the embodiments of the present application can be applied to industrial scenarios involving the reading of two-dimensional codes or bar codes. For example, in a logistics transfer center, a code reading camera is installed on the gantry above an express automatic conveyor belt, and the code reading camera reads a two-dimensional code or bar code on an upper surface of an express package to sort it. Due to different heights of different express packages, distances between the code reading camera and the upper surfaces of different express packages also vary. In this case, the distance between the lens of the code reading camera and the upper surface of the express package can be adjusted by the focusing method provided in the present application, thereby achieving fast automatic focusing. For another example, the code reading camera is installed on the production line in the factory, and the code reading camera reads the two-dimensional code or bar code of a product on the production line to achieve the storage of product information. In this case, due to factors such as adjusting of the production line structure or reinstalling of the code reading camera, a distance between the code reading camera and a surface of the product on which the two-dimensional code or bar code is located may change. In this case, the distance between the lens of the code reading camera and the upper surface of the express package can be adjusted by the focusing method provided in the embodiment of the present application, thereby achieving fast automatic focusing.

For example, in the application scenarios described above, after deploying the code reading camera, a stationary reference object can first be placed below the lens of the code reading camera, and then the code reading camera can be focused through the reference object. After the focusing of the code reading camera is completed, the code reading camera can be put into use. In the subsequent process of using the code reading camera, the object whose code is to be read passes under the lens of the code reading camera. If the height difference between the object whose code is to be read and the reference object used for focusing is significant, the code reading camera can be refocused. In this case, the fast automatic focusing can be achieved through the focusing method provided in the embodiment of the present application.

The above are only two possible application scenarios provided by the embodiments of the present application. The embodiments of the present application can also be used in other industrial code reading scenarios that require automatic focusing, and the embodiments of the present application do not limit to this.

Next, the system architecture involved in the embodiments of the present application will be introduced.

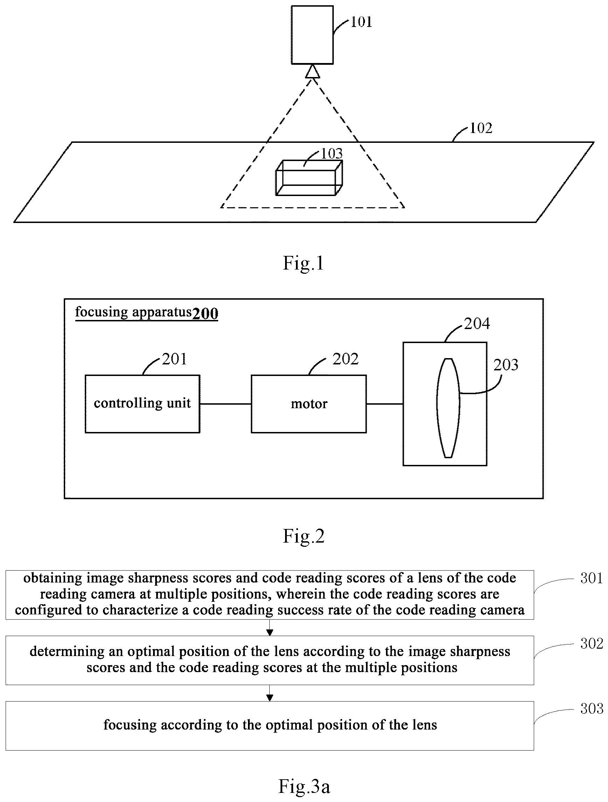

Figure 1 is an architecture diagram of an image acquisition system provided by an embodiment of the present application; As shown in Figure 1, the image acquisition system includes a code reading camera 101, a conveyor belt 102, and an object whose code is to be read 103 located on the conveyor belt 102.

The code reading camera 101 can be installed on the gantry above the conveyor belt 102. Moreover, the lens of the code reading camera 101 faces an target surface of the object whose code is to be read 103 on the conveyor belt 102. The target surface refers to a surface where the two-dimensional code or bar code is located. In the express logistics industry, the target surface is usually an upper surface of the express package when it is located on the conveyor belt 102, that is, a surface of the express package away from the conveyor belt. Of course, in other possible scenarios, the target surface may also be a side of the object whose code is to be read 103, which is not limited in the embodiment of the present application.

It should be noted that in the embodiment of the present application, the code reading camera 101 can start image acquisition upon detecting a trigger signal. The code reading camera 101 first adjusts the position of the lens by moving the lens. In the present application, adjusting the position of the lens refers to adjusting the overall position of the lens or the position of a local part of the lens. However, a focal length of the code reading camera should change with the adjustment of the lens position. Exemplary, in one possible implementation, the center of mass of the lens can be adjusted while maintaining its shape. In another possible implementation, if the lens is a T-Lens (variable focus) lens or a liquid lens, the relative positions among points inside the lens can be adjusted, that is, the shape of the lens is changed and adjusted while maintaining the position of the center of mass of the lens unchanged.

For the convenience of description, the following only takes the case of adjusting the center of mass of the lens as an example. The principle for changing the shape of the lens is completely the same and will not be repeated here. As the position of the center of mass changes, the distance between the lens and the target surface of the object whose code is to be read also changes. Therefore, adjusting the distance from the center of mass of the lens also means adjusting the distance between the lens and the target surface of the object whose code is to be read. Every time the distance is adjusted, the code reader can perform an image acquisition on the object whose code is to be read. The image sharpness scores and code reading scores of the lens at multiple positions are calculated according to the acquired images, and then an optimal position of the lens is determined from the multiple positions according to the image sharpness scores and code reading scores of the lens at the multiple positions. In the disclosure, only one image can be acquired or multiple images can be acquired for a single image acquisition. For the case of acquiring one image, the image sharpness score is used to represent the sharpness of the image, and the code reading score is used to represent the quality of the two-dimensional code and bar code in the image. For the case of acquiring multiple images, the image sharpness score is used to represent the overall sharpness of the multiple images, and the code reading score is used to represent the overall quality of the two-dimensional codes and bar codes in the multiple images. Taking the sharpness score as an example, the respective sharpnesss of the multiple images can be determined respectively, to obtain the image sharpness score that represents the average sharpness of all images; alternatively, an image with the highest sharpness can be determined from the multiple images, to generate the image sharpness score that represents the sharpness of the image with the highest sharpness. Afterwards, the code reading camera drives the lens to move to the optimal position for focusing by controlling the motor. After focusing is completed, the code reading camera 101 can acquire the images of the two-dimensional code or bar code on the target surface of the object whose code is to be read 103, and read the two-dimensional code or bar code.

In one possible implementation, Figure 2 shows a schematic structure diagram of a focusing apparatus 200 applied to a code reading camera. As shown in Figure 2, the focusing apparatus 200 includes a controlling unit 201, a motor 202, a lens 203, and a moving mechanism 204.

The controlling unit 201 is connected to the motor 202. The lens 203 can be located in the moving mechanism 204, as shown in Figure 2. Alternatively, the lens 203 is connected to the moving mechanism 204 (not shown in Figure 2). The motor 202 is connected to the moving mechanism 204, so that the controlling unit 201 can control the motor 202 to drive the moving mechanism 204 to move. The moving of the moving mechanism 204 drives the lens 203 to move. The moving mechanism 204 can drive the lens 203 to move in a direction perpendicular to a lens surface of the lens 203, that is, in a direction of an optical axis of the lens surface (hereinafter referred to as the axis of the lens surface), and the travel that the moving mechanism 204 can move is certain. In this way, driven by the moving mechanism 204, the lens 203 will also move along an axis perpendicular to its own lens surface, and the travel of the lens 203 is also certain.

In the embodiment of the present application, the controlling unit 201 first controls the motor 202 to drive the moving mechanism 204 which in turn drives the lens 203 to continuously move along a specified search direction with a specified search step size, in order to search for a rough position of the lens 203. The specified search step size can be a fixed step size or a variable step size. For example, in one possible embodiment, the search step size is fixed to 1 unit step size, while in another possible embodiment, the search step size is initially 2 unit steps and decreases as the image sharpness score increases.

After obtaining the rough position of the lens 203, the controlling unit 201 determines the optimal position of the lens 203 according to the code reading scores of the lens 203 when the lens 203 is located at various positions determined during the rough search process, and then calculates a movement distance and a focusing movement direction from the current position of the lens 203 to the optimal position. Afterwards, the controlling unit 201 controls the motor 202 to drive the moving mechanism 204, which in turn drives the lens 203 to move along the focusing direction by the movement distance to reach the optimal position, completing focusing.

It should be noted that the code reading camera not only includes the focusing apparatus 200 mentioned above, but also includes other essential camera components such as image sensors, filter components, and light-supplementing devices, which will not be described in the embodiment of the present application.

Next, a detailed description will be provided for the focusing method provided in an embodiment of the present application.

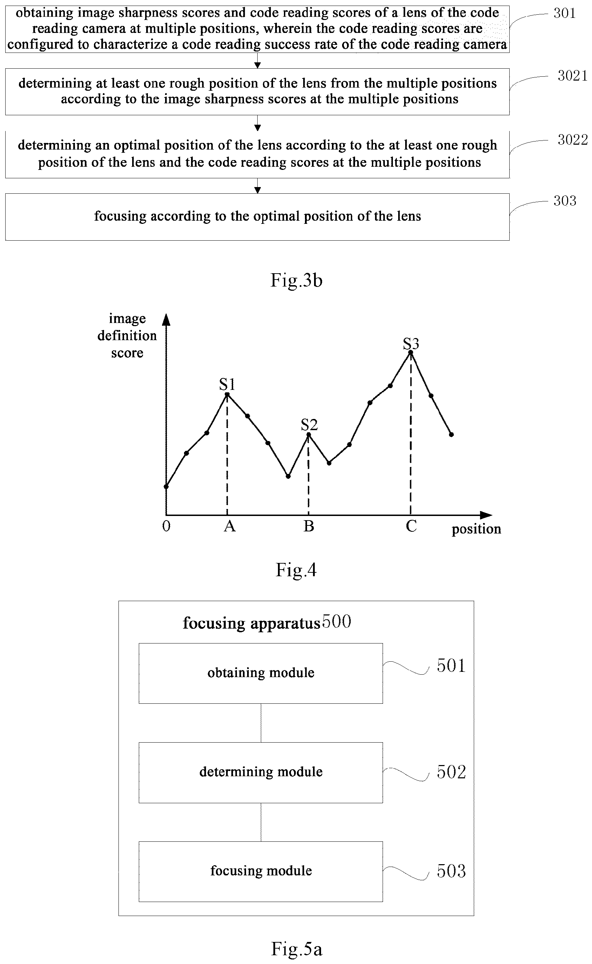

Figure 3 is a flowchart of a focusing method provided in the embodiment of the present application, which can be applied to a code reading camera or an electronic device independent of the code reading camera and capable of controlling the code reading camera for focusing. For example, this focusing method can be applied to the controlling unit of the code reading camera shown in Figure 2. As shown in Figure 3, this method includes the following steps:
step 301: obtaining image sharpness scores and code reading scores of a lens of the code reading camera at multiple positions, wherein the code reading scores are configured to characterize a code reading success rate of the code reading camera.

It can be understood that the higher the quality of the two-dimensional code or bar code in the image acquired by the code reading camera, the higher the success rate of the code reading camera. Therefore, the code reading scores can characterize the code reading success rate of the code reading camera.

In the embodiment of this application, after start of focusing, the code reading camera first obtains the image sharpness score and code reading score of the lens at a search starting position. The so-called search starting position refers to that the lens moves from the search starting position after start of focusing.

For example, the search starting position can be the travel starting position of the lens or the travel ending position of the lens of a code reading camera. The travel starting position of the lens is a position where the vertical distance between the lens and the target surface of the object whose code is to be read is maximum, and the travel ending position of the lens is a position where the vertical distance between the lens and the target surface is minimum. That is to say, when the moving mechanism in the code reading camera drives the lens to move away from the target surface in a direction perpendicular to the lens surface of the lens until the lens cannot move further, the distance between the lens and the target surface is the maximum, and a position where the lens is located at this moment is the travel starting position of the lens. Accordingly, when the moving mechanism in the code reading camera drives the lens to move towards the target surface in the direction perpendicular to the lens surface of the lens until the lens cannot move further, the distance between the lens and the target surface is the minimum and a position where the lens is located at this moment is the travel ending position of the lens. Moreover, in one possible implementation, in order to facilitate the focusing of the code reading camera, before each automatic focusing of the code reading camera, the position of the lens is adjusted to the travel starting position or travel ending position.

The code reading camera can acquire an image or images when the lens is at the search starting position, and use the acquired image or images at this position to calculate the image sharpness score of the lens at that position by using the image autocorrelation method, image high-frequency component method, or other methods for calculating the image sharpness score. The higher the image sharpness score, the higher the sharpness of the image or images acquired when the lens acquires images in this position.

At the same time, the code reading camera can also calculate the code reading score of the bar code in the image acquired at the search starting position according to the ISO 15416 standard, or the code reading score of the two-dimensional code in the image acquired at the search starting position according to the ISO 15415 standard. The higher the code reading score, the better the code reading effect when reading the image with the lens at this position.

After obtaining the image sharpness score and code reading score at the search starting position, the code reading camera can control the motor to drive the lens to continuously move from the search starting position. Every time the lens moves to a position, the code reading camera calculates the image sharpness score and code reading score of the lens at this position.

Exemplary, the code reading camera controls the motor to drive the lens to move from the search starting position along the specified search direction with the specified search step size. In this way, every time the lens moves the specified search step, the image sharpness score and code reading score are obtained once. When the search starting position is the travel starting position of the lens, the specified search direction is a direction from the travel starting position of the lens to the travel ending position of the lens. When the search starting position is the travel ending position of the lens, the specified search direction is a direction from the travel ending position of the lens to the travel starting position of the lens.

It should be noted that, from the previous introduction, the lens in the code reading camera can be located in or connected to the moving mechanism, and the movement of the moving mechanism drives the lens to move. The moving mechanism moves in the direction perpendicular to the lens surface of the lens, and the travel that the moving mechanism can move is certain. In this way, driven by the moving mechanism, the lens will also move along a direction perpendicular to its own lens surface, and the travel of the lens is also certain. During the movement of the lens, the lens can move according to the specified search step size, which is a distance that the lens moves once. Moreover, in the embodiment of the present application, the specified search step size can be manually set. The smaller the specified search step, the higher the search accuracy; the larger the specified search step, the higher the search efficiency.

In one possible embodiment, when the code reading camera starts focusing, the lens may be neither at the travel starting position nor the travel ending position. In this case, the code reading camera can control the lens to move from its current position to the travel starting position or the travel ending position of the lens. Then, according to the method described above, the lens moves from the travel starting position or the travel ending position of the lens along the specified search direction according to the specified search step size.

During the movement of the lens, every time the lens moves to a position, the code reading camera can acquire an image at this position, and use the acquired image at this position to calculate the image sharpness score of the lens at this position by using the image autocorrelation method, image high-frequency component method, or other methods for calculating the image sharpness score.

At the same time, the code reading camera can also calculate the code reading score of the bar code in the image acquired at this position based on the ISO 15416 standard, or the code reading score of the two-dimensional code in the image acquired at this position according to the ISO 15415 standard.

It should be noted that in some possible scenarios, when the lens is moved to a position, there may not be a two-dimensional code or bar code in the field of view of the code reading camera at this position. In this case, the code reading score calculated by the code reading camera according to the image acquired at this position will be 0 or other relatively small values.

step S302: determining an optimal position of the lens according to the image sharpness scores and the code reading scores at the multiple positions.

The method of determining the optimal position can vary depending on the application scenario, but the image sharpness and code reading scores at the optimal position should be as high as possible, and the image sharpness scores at any other positions should be lower than the image sharpness score at the optimal position, or the code reading score at any other positions should be lower than the code reading score at the optimal position.

Exemplary, in one possible implementation, a comprehensive score at each position is determined according to the image sharpness scores and code reading scores at multiple positions, and a position with the highest comprehensive score is determined as the optimal position of the lens.

The comprehensive score at each position is obtained by weighted summation of the image sharpness score and code reading score at this position. The weight of the image sharpness score and the weight of the code reading score during the weighted summation can be set by the user according to actual needs and/or experience.

In another possible implementation, as shown in Figure 3b, step 302 includes two steps: step 3021 and step 3022:
Step 3021: determining at least one rough position of the lens from the multiple positions according to the image sharpness scores at the multiple positions.

In one possible implementation, it can be seen from the description for step 301 that, every time the lens moves along the specified search direction with the specified search step, the code reading camera can calculate the image sharpness score and the code reading score after once movement of the lens. Based on this, during the movement of the lens, every time the code reading camera obtains an image sharpness score at the moved position, the code reading camera can determine the trend of all of the already obtained image sharpness scores as the lens moves. If the already obtained multiple image sharpness scores show a trend of first increasing and then decreasing as the lens moves and a decrease ratio of the most recently obtained image sharpness score relative to the maximum value among the already obtained multiple image sharpness scores reaches a first threshold, the code reading camera further determining whether the code reading score at a first position corresponding to the maximum value among the already obtained multiple image sharpness scores is greater than a second threshold. If the code reading score at the first position is greater than the second threshold, the code reading camera will take the first position as the rough position of the lens.

It should be noted that every time the lens moves to a position and the code reading camera obtains the image sharpness score of the lens at this position, the code reading camera can draw a relationship curve between the already obtained image sharpness scores and positions corresponding to the obtained image sharpness scores. If the image sharpness scores on the relationship curve shows a trend of first increasing and then decreasing, the code reading camera calculates the difference between the maximum value among the already obtained image sharpness scores and the image sharpness score at the current position of the lens, and then calculates a ratio of this difference to the maximum value among the multiple image sharpness scores, where the ratio is the decreasing ratio. If the decrease ratio is greater than the first threshold, it is determined that the decrease ratio has reached the first threshold, and it is considered that the lens position with the highest image sharpness has been found. At this point, the code reading camera can further determine whether the code reading score at the first position corresponding to the maximum value among the multiple image sharpness scores is greater than the second threshold. If the code reading score at the first position is greater than the second threshold, it indicates that when the lens is at the first position, there is a two-dimensional code or bar code in the field of view of the code reading camera. Subsequently, the code reading camera can further determine the optimal position of the lens through the code reading score. In this case, the code reading camera can take this first position as the searched rough position of the lens. Correspondingly, the code reading camera can stop moving the lens, that is, stop searching for the rough position of the lens.

It should be noted that the first threshold is a pre-set proportional value, which can be 20%, 40%, or other numerical values, which is not limited in the embodiment of the present application. The second threshold can be a predetermined value that is not greater than the minimum value among the reading code scores when there is a two-dimensional code or bar code in the field of view of the code reading camera. For example, the second threshold can be a value such as 0, 1, 2, etc., which is not limited in the embodiment of the present application.

Of course, if the image sharpness scores, on the drew relationship curve between the obtained image sharpness scores and positions of the lens, do not show a trend of first increasing and then decreasing, or if the decrease ratio of the image sharpness score at the current position of the lens relative to the maximum value among the already obtained multiple image sharpness scores does not reach the first threshold although the image sharpness scores show a trend of first increasing and then decreasing, or if the code reading score at the first position corresponding to the maximum value among the already obtained multiple image sharpness scores is not greater than the second threshold, the code reading camera can continue to drive the lens to move so as to obtain the image sharpness score and code reading score at a next position, and the above determination process is repeated.

It can be seen that in the implementation mentioned above, the code reading camera may have searched a rough position without the need for the lens to move to all positions along the specified search direction. In this way, the search time can be reduced and the search efficiency can be improved.

In another possible implementation, a code reading camera can also determine the at least one rough position of the lens according to the obtained image sharpness scores at all positions during the lens movement, after the lens moves from the travel starting position to the movement ending position or from the travel ending position to the travel starting position.

For example, in this implementation, it is possible to draw the relationship curve between the multiple positions where the lens of the code reading camera is located during movement and the image sharpness scores at these multiple positions; obtain at least one image sharpness score peak from the relationship curve; determine, from at least one position corresponding to the at least one image sharpness score peak, the second position where the code reading score corresponding to the second position is greater than the second threshold; take the determined second position as the at least one rough position of the lens.

The relationship curve between the image sharpness scores at multiple positions obtained when the lens of the code reading camera moves from the search starting position to the search ending position and the multiple positions can be drawn. In this way, there may be one or more peak points on the drawn relationship curve. In this case, the code reading camera obtains the image sharpness score peak at each peak point in the relationship curve, thereby obtaining at least one image sharpness score peak.

The image sharpness score peak can be determined from the relationship curve based on any peak-searching algorithm, which is not limited in the present application.

After obtaining the at least one image sharpness score peak, the code reading camera determines whether the code reading score at a position corresponding to each image sharpness score peak is greater than the second threshold, and takes a position where the code reading score corresponding to the position is greater than the second threshold as the second position. At this point, one or multiple second positions may be determined, and the code reading camera can take the determined second positions as the at least one rough position.

Figure 4 is the relationship curve between multiple positions and image sharpness scores at the multiple positions, as shown in the embodiment of the present application. As shown in Figure 4, there are three peak points in this curve, and the code reading camera can obtain the peak value at each peak point, resulting in three image sharpness scoring peaks S1, S2 and S3. Afterwards, the code reading camera determines whether the code reading score at a position corresponding to each peak is greater than the second threshold. Assuming the second threshold is 0, the code reading scores at position A corresponding to S 1 and at position C corresponding to S3 are both greater than 0, while the code reading score at position B corresponding to S2 is equal to 0, then the code reading camera will take positions A and C as the rough positions of the lens.

In some possible cases, when determining whether the code reading score at the position corresponding to each image sharpness score peak is greater than the second threshold, it is possible that none of the code reading scores at the positions corresponding to the image sharpness score peaks is greater than the second threshold. Therefore, it is impossible to obtain the position where the code reading score is greater than the second threshold, that is, the number of second positions is 0. In this case, the code reading camera can obtain the maximum image sharpness score from the at least one image sharpness score peak, and take a position corresponding to the maximum image sharpness score as the optimal position of the lens, and then perform focus according to the optimal position of the lens referring to the implementation in step 304.

step 3022: determining an optimal position of the lens according to the at least one rough position of the lens and the code reading scores at the multiple positions.

After obtaining the at least one rough position of the lens, the code reading camera performs a fine search for the at least one rough position and other positions near the rough position according to the obtained multiple code reading scores to determine the optimal position of the lens.

For example, the code reading camera first determines a candidate search interval corresponding to each rough position, which is the lens position interval centered on the corresponding rough position; determines a local maximum code reading score within each candidate search interval from the code reading scores corresponding to respective positions included in the candidate search interval; determines the optimal position of the lens according to the local maximum code reading score within each candidate search interval.

Taking any rough position as an example, for the convenience of description, this rough position is referred to as the first rough position. The code reading camera takes the first rough position as the center and specifies a distance forward and a distance backward along the specified search direction, thus forming a candidate search interval corresponding to the first rough position. The specified distance is greater than the specified search step size.

For example, if the first rough position is S, then the candidate search interval [S-L, S+L] is formed by taking S as the center and taking a distance L forward and a distance L backward along the specified search direction, where S is greater than L.

After determining the candidate search interval corresponding to the first rough position, for each position within the candidate search interval where the lens is located when moving, the code reading camera can obtain the code reading score at the respective position and determine the maximum value from the obtained code reading scores. This maximum value is the local maximum code reading score within the candidate search interval. It should be noted that if there is one rough position, then there is one candidate search interval corresponding to the one rough position, and thus there is one local maximum code reading score. Although there is one local maximum code reading score, there may be one or multiple positions corresponding to the local maximum code reading score. That is to say, the code reading score at one position is the local maximum, or the code reading scores at multiple positions are the same, and are all the local maximum code reading score. Based on this, if there is one candidate search interval and there is one position corresponding to the local maximum code reading score within the candidate search interval, the code reading camera can directly take the position corresponding to the local maximum code reading score as the optimal position of the lens. If there is one candidate search interval and there are multiple positions corresponding to the local maximum code reading score within the candidate search interval, the code reading camera can select the third position closest to the rough position corresponding to the candidate search interval from the multiple positions corresponding to the local maximum code reading score within the candidate search interval, and take the third position as the optimal position of the lens.

If there are multiple rough positions, then there are multiple candidate search intervals corresponding to the multiple rough positions, and multiple local maximum code reading scores are obtained. In this case, the code reading camera first determines the maximum value among the local maximum code reading scores within the multiple candidate search intervals, obtaining the global maximum value. At this point, there may be one or multiple positions corresponding to the global maximum value. Based on this, if there is one position corresponding to the global maximum value, the position corresponding to the global maximum value is directly taken as the optimal position of the lens. If there are multiple positions corresponding to the global maximum value, the distance between each position corresponding to the global maximum value and the rough position corresponding to the candidate search interval within which the position is located is determined, and a position with the smallest distance from the rough position corresponding to the candidate search interval within which the position itself is located, is taken as the optimal position of the lens.

For example, if there are three positions corresponding to the global maximum value, namely a, b, and c, where a is located within the candidate search interval U1 which corresponds to a rough position M, b is located within the candidate search interval U2 which corresponds to a rough position N, and c is located within the candidate search interval U3 which corresponds to a rough position Q, then the code reading camera calculates the distance between a and M to obtain a first distance, calculates the distance between b and N to obtain a second distance, and calculates the distance between c and Q to obtain a third distance. The sizes of the first distance, second distance and third distance are compared, and if the first distance is the smallest, then a is selected as the optimal position of the lens.

In some possible implementations, in step 301, the code reading camera can obtain the image sharpness score of the lens at the search starting position when the lens is at the search starting position. Subsequently, starting from the search starting position, every time the lens of the code reading camera moves once according to the specified search step size, the code reading camera can obtain the image sharpness score at a position where the lens is located after movement. In order to distinguish, the specified search step used here is referred to as the first search step.

In this way, during the movement of the lens, every time the code reading camera obtains an image sharpness score at the moved position, then the code reading camera can determine the trend of all the already obtained image sharpness scores as the lens moves. If the already obtained multiple image sharpness scores show a trend of first increasing and then decreasing as the lens moves, and the decrease ratio of the most recently obtained image sharpness score relative to the maximum value among the already obtained multiple image sharpness scores reaches the first threshold, then the position corresponding to the maximum value among the already obtained multiple image sharpness scores is taken as the searched rough position.

Alternatively, the code reading camera can refer to the methods introduced in steps 3021 and 3022 above to obtain at least one image sharpness score peak from image sharpness scores at all the positions obtained during the lens movement from the travel starting position to the travel ending position or from the travel ending position to the travel starting position, and use at least one position corresponding to the at least one image sharpness peak as the at least one rough position.

After obtaining the at least one rough position, for each rough position, the code reading camera can refer to the method introduced in this step to determine the candidate search interval corresponding to the rough position. Afterwards, for the candidate search interval corresponding to each rough position, the code reading camera can control the lens to move from one endpoint of the candidate search interval towards the other endpoint of the candidate search interval according to a second search step size, where the second search step size is smaller than the first search step size used for rough position search above. Each time after moving the second search step size, the code reading camera can perform an image acquisition once and calculate the code reading score of the lens at the position after movement according to the acquired image. In this way, the code reading camera can obtain the code reading scores at multiple positions within each candidate search interval where the lens is located. Afterwards, the code reading camera can determine the local maximum code reading score within each candidate search interval according to the code reading scores at multiple locations within the candidate search interval, and then determine the optimal position of the lens according to the local maximum code reading score within each candidate search interval referring to the method introduced in this step. This will not be repeated here.

step 303: focusing according to the optimal position of the lens.

After determining the optimal position of the lens, the code reading camera can calculate the distance difference between the current position of the lens and the optimal position of the lens, and obtain the movement distance that the lens needs to move. At the same time, the code reading camera can also determine whether the direction from the current position of the lens to the optimal position of the lens is a direction from the travel starting position to the travel ending position or a direction from the travel ending position to the travel starting position, and use the determined direction as the subsequent movement direction of the lens.

After determining the movement distance and movement direction of the lens, the code reading camera controls the motor to drive the lens to move along the movement direction by the movement distance so as to reach the optimal position of the lens, thereby completing focusing.

In the embodiments of the present application, automatic focusing is performed according to the image sharpness scores and code reading scores of the lens of the code reading camera at different positions. Since the code reading score can characterize the code reading success rate of the code reading camera, the embodiment of the present application actually evaluates the focusing effect of the lens at different positions by combining the image sharpness and code reading effect of the code reading camera, to determine the optimal position of the lens and further complete automatic focusing. This not only ensures the sharpness of the image acquired by the code reading camera after focusing is completed, but can also ensure the code reading success rate of the code reading camera after focusing is completed.

In addition, in the embodiment of the present application, after searching the image sharpness score peaks, a position where a code reading score does not exist, among positions corresponding to the image sharpness score peaks, can be filtered out to obtain the at least one rough position. In this way, the obtained at least one rough position each is the position where there is a two-dimensional code or bar code in the field of view, avoiding the impact of pseudo image sharpness peaks and improving the success rate of focusing.

Next, a focusing apparatus provided in an embodiment of this application is described..

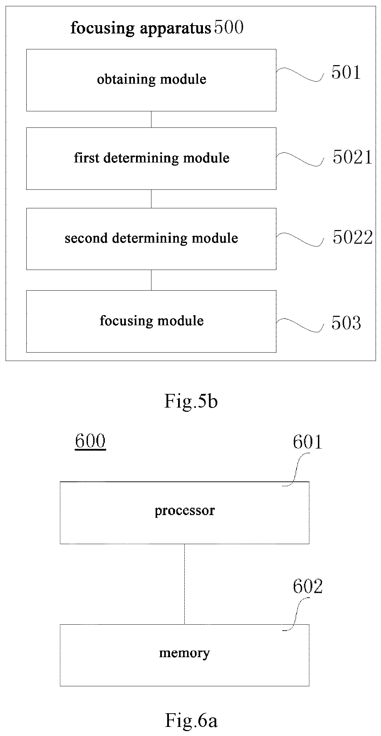

Figure 5a is a schematic structure diagram of a focusing apparatus 500 provided in the embodiment of the present application. The focusing device 500 can be implemented as a part or all of the code reading camera in software, hardware, or a combination of both. Please refer to Figure 5, the apparatus 500 includes: obtaining module 501, determining module 502 and focusing module 503.

The obtaining module 501 is configured for obtaining image sharpness scores and code reading scores of a lens of a code reading camera at multiple positions, wherein the code reading scores are configured to characterize a code reading success rate of the code reading camera;
the determining module 502 is configured for determining an optimal position of the lens according to the image sharpness scores at the multiple positions; and
the focusing module 503 is configured for focusing according to the optimal position of the lens.

In one possible implementation, as shown in Figure 5b, the determining module 502 includes:
a first determining module 5021, configured for determining at least one rough position of the lens from the multiple positions according to the image sharpness scores at the multiple positions; and
a second determining module 5022, configured for determining the optimal position of the lens according to the at least one rough position of the lens and the code reading scores at the multiple positions.

In one possible implementation, the obtaining module 501is mainly configured for:
obtaining an image sharpness score and a code reading score of the lens at a search starting position, wherein the search starting position is a travel starting position or a travel ending position of the lens, the travel starting position of the lens is a position where a vertical distance between the lens and a target surface of an object whose code is to be read is maximum, and the travel ending position of the lens is a position where the vertical distance between the lens and the target surface is minimum;
controlling the lens to move from the search starting position along a specified search direction with a specified search step size, wherein when the search starting position is the travel starting position of the lens, the specified search direction refers to a direction from the travel starting position to the travel ending position of the lens; and when the search starting position is the travel ending position of the lens, the specified search direction refers to a direction from the travel ending position to the travel starting position of the lens; and
every time the lens moves the specified search step size, obtaining an image sharpness score and a code reading score after movement of the lens.

In one possible implementation, the first determining module 5021 is mainly configured for:
during movement of the lens along the specified search direction, if already obtained multiple image sharpness scores show a trend of first increasing and then decreasing as the lens moves and a decrease ratio of a most recently obtained image sharpness score relative to a maximum value among the multiple image sharpness scores reaches a first threshold, determining whether a code reading score at a first position corresponding to the maximum value among the multiple image sharpness scores is greater than a second threshold; and
if the code reading score at the first position is greater than the second threshold, taking the first position as the rough position of the lens.

In one possible implementation, the first determining module 5021 is mainly configured for:
drawing a relationship curve between the multiple positions and the image sharpness scores at the multiple positions;
obtaining at least one image sharpness score peak from the relationship curve;
from at least one position corresponding to the at least one image sharpness score peak, determining a second position where a corresponding code reading score is greater than the second threshold; and
taking the determined second position as the at least one rough position of the lens.

In one possible implementation, the second determining module 5022 is mainly configured for:
determining a candidate search interval corresponding to each rough position, wherein the candidate search interval is a lens position interval centered on the rough position;
determining a local maximum code reading score within each candidate search interval from the code reading scores corresponding to respective positions included in the candidate search interval; and
determining the optimal position of the lens according to the local maximum code reading score within each candidate search interval.

In one possible implementation, the second determining module 5022 further is mainly configured for:
if there is one candidate search interval and there is one position corresponding to the local maximum code reading score within the candidate search interval, taking the position corresponding to the local maximum code reading score within the candidate search interval as the optimal position of the lens;
if there is one candidate search interval and there are multiple positions corresponding to the local maximum code reading score within the candidate search interval, selecting a third position closest to a rough position corresponding to the candidate search interval from the multiple positions corresponding to the local maximum code reading score within the candidate search interval, and taking the third position as the optimal position of the lens; and
if there are multiple candidate search intervals, taking a maximum value among local maximum code reading scores within the multiple candidate search intervals as a global maximum value; if there is one position corresponding to the global maximum value, taking the position corresponding to the global maximum value as the optimal position of the lens; if there are multiple positions corresponding to the global maximum value, determining a distance between each position of the multiple positions corresponding to the global maximum value and a rough position corresponding to a candidate search interval where the position itself is located, and taking a position with a smallest distance from the rough position corresponding to the candidate search interval where the position itself is located as the optimal position of the lens.

In one possible implementation, the focusing module 503 is mainly configured for:
determining a focusing movement direction and a movement distance of the lens according to the optimal position and a current position of the lens; and
driving the lens to move to the optimal position of the lens according to the focusing movement direction and the movement distance of the lens to complete focusing.

In the embodiment of the present application, automatic focusing is performed according to the image sharpness scores and code reading scores of the lens of the code reading camera at different positions. Since the code reading scores can characterize the code reading success rate of the code reading camera, the embodiment of the present application actually evaluates the focusing effect of the lens at different positions by combining the image sharpness and code reading effect of the code reading camera, to determine the optimal position of the lens and further complete automatic focusing. This not only ensures the sharpness of the image acquired by the code reading camera after focusing is completed, but can also ensure the code reading success rate of the code reading camera after focusing is completed.

It should be noted that describing the focusing of the focusing apparatus provided in the above embodiment by the above division of various functional modules is only an example. In practical applications, the above functions can be assigned to different functional modules according to needs, that is, the internal structure of the apparatus can be divided into different functional modules to complete all or part of the functions described above. In addition, the focusing apparatus embodiment provided by the above embodiment and the focusing method embodiments belong to the same concept, and the specific implementation process of the focusing apparatus is detailed in the method embodiments, which will not be repeated here.

Figure 6a is a schematic structure diagram of a computer device provided in an embodiment of the present application. The code reading camera in the aforementioned embodiments can be implemented through this computer device.

Typically, the computer device 600 includes a processor 601 and a memory 602.

The processor 601 may include one or more processing cores, such as a 4-core processor, an 8-core processor, etc. The processor 601 can be implemented in at least one hardware form of DSP (Digital Signal Processing) or FPGA (Field-Programmable Gate Array). The processor 601 can also include a main processor and a coprocessor. The main processor is a processor used to process data in a wake-up state, also known as a Central Processing Unit (CPU); and the coprocessor is a low-power processor used to process data in a standby state. In some embodiments, the processor 601 may be integrated with a GPU (Graphics Processing Unit), which is responsible for rendering and drawing the content that needs to be displayed by the display screen. In some embodiments, the processor 601 may also include an AI (Artificial Intelligence) processor for processing computational operations related to machine learning. It should be noted that the controlling unit in the focusing device 200 shown in Figure 2 can be implemented through the processor 601.

The memory 602 may include one or more computer-readable storage media, which may be non-transitory. The memory 602 may also include a high-speed random access memory, as well as non-volatile memory, such as one or more disk storage devices, flash memory storage devices. In some embodiments, the non-transitory computer-readable storage medium in the memory 602 is used to store at least one instruction, which is executed by the processor 601 to carry out the focusing method provided in the method embodiment of the present application.

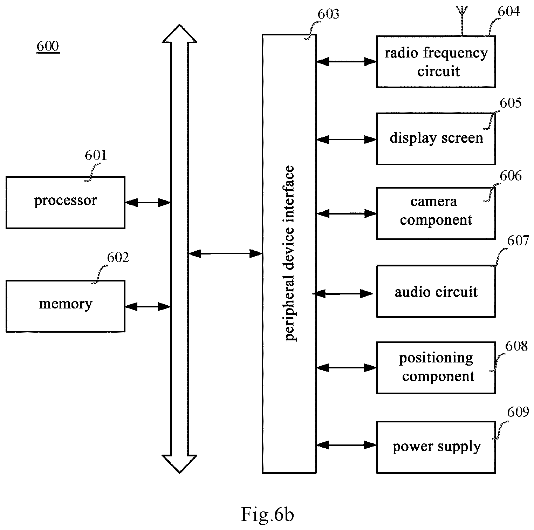

In some embodiments, as shown in Figure 6b, the computer device 600 may also optionally include: a peripheral device interface 603 and at least one peripheral device. The processor 601, memory 602, and peripheral device interface 603 can be connected through a bus or signal line. Each peripheral device can be connected to the peripheral device interface 603 through a bus, signal line, or circuit board. Specifically, the peripheral device includes at least one of a radio frequency circuit 604, a display screen 605, a camera component 606, an audio circuit 607, a positioning component 608, and a power supply 609.

The peripheral device interface 603 can be used to connect at least one peripheral device related to I/O (Input/Output) to the processor 601 and memory 602. In some embodiments, the processor 601, memory 602, and peripheral device interface 603 are integrated on the same circuit board. In some other embodiments, any one or two of the processor 601, memory 602 and peripheral device interface 603 can be implemented on a separate circuit board, and this embodiment is not limited to this.

The RF circuit 604 is used to receive and transmit RF (Radio Frequency) signals, also known as electromagnetic signals. The RF circuit 604 communicates with communication networks and other communication devices through electromagnetic signals. The radio frequency circuit 604 converts electrical signals into electromagnetic signals for transmission, or converts the received electromagnetic signals into electrical signals. In one possible implementation, the RF circuit 604 includes an antenna system, a RF transceiver, one or more amplifiers, a tuner, an oscillator, a digital signal processor, a user identity module card, and so on. The RF circuit 604 can communicate with other terminals through at least one wireless communication protocol. This wireless communication protocol includes but is not limited to: metropolitan area networks, various generations of mobile communication networks (2G, 3G, 4G, and 5G), wireless local area networks, and/or WiFi (Wireless Fidelity) networks. In some embodiments, the RF circuit 604 may also include circuits related to NFC (Near Field Communication), which is not limited in the present application.

The display screen 605 is used to display a UI (User Interface). The UI can include graphics, text, icons, videos, and any combination of them. When the display screen 605 is a touch screen display, the display screen 605 also has the ability to collect touch signals on or above the surface of the display screen 605. The touch signal can be input as a control signal to the processor 601 for processing. At this point, the display screen 605 can also be used to provide virtual buttons and/or virtual keyboards, also known as soft buttons and/or soft keyboards. In some embodiments, there can be one display screen 605, arranged at the front panel of the computer device 600. In other embodiments, there can be at least two display screens 605, respectively arranged on different surfaces of the computer device 600 or in a folded design. In other embodiments, the display screen 605 may be a flexible display screen arranged on a curved or folded surface of the computer device 600. Even, the display screen 605 can be configured as an irregular shape rather than rectangular shape, also known as an irregular screen. The display screen 605 can be prepared using materials such as LCD (Liquid Crystal Display), OLED (Organic Light-Emitting Diode) and so on.

The camera component 606 is used to acquire images or videos. The camera component 606 can include the focusing apparatus 200 shown in Figure 2 above. In addition, the camera component can further include an image sensor, a filter component, a light-supplementing device, etc. The image sensor is used to generate and output image signals through exposure. The filter component is used to filter the visible light entering the camera component in a specific wavelength band. The light-supplementing device is used to supplement light during the exposure process of the image sensor.

The audio circuit 607 may include a microphone and speaker. The microphone is used to collect sound waves from users and the environment, convert the sound waves into electrical signals and input them to the processor 601 for processing, or input them to the RF circuit 604 for voice communication. For the purpose of stereo acquisition or noise reduction, there can be multiple microphones, respectively arranged at different parts of the computer device 600. The microphone can also be an array microphone or an omnidirectional acquisition microphone. The speaker is used to convert electrical signals from the processor 601 or the RF circuit 604 into sound waves. The speaker can be a traditional thin film speaker or a piezoelectric ceramic speaker. When the speaker is a piezoelectric ceramic speaker, it can not only convert the electrical signals into sound waves that can be heard by humans, but also convert the electrical signals into sound waves that cannot be heard by humans for ranging and other purposes.

The positioning component 608 is used to locate the current geographic location of the computer device 600 for navigation or LBS (Location Based Service). The positioning component 608 can be a positioning component based on the Global Positioning System (GPS) of the United States, the Beidou system of China, or the Galileo system of the European Union.

The power supply 609 is used to power various components in the computer device 600. The power supply 609 can be AC, DC, disposable battery, or rechargeable battery. When the power supply 609 includes a rechargeable battery, the rechargeable battery can support wired or wireless charging. This rechargeable battery can also be used to support fast charging technology.

Those skilled in the art can understand that the structure shown in Figure 6b does not constitute a limitation on the computer device 600, and the computer device 600 can include more or fewer components than shown in Figure 6b, or combine certain components, or adopt different component arrangements.

An embodiment of the present application also provides a non-temporary computer-readable storage medium having instructions stored thereon, wherein the instructions when executed by a processor of the computer device, cause the computer device to carry out the focusing method provided in the previous embodiment. For example, the computer readable storage medium can be ROM, RAM, CD-ROM, magnetic tape, floppy disk, optical data storage device, etc.

It should be noted that the computer-readable storage medium mentioned in the embodiment of the present application can be a non-volatile storage medium, in other words, it can be a non-instantaneous storage medium.

An embodiment of the present application also provides a computer program product containing instructions, which, when running on a computer device, causes the computer device to carry out the focusing method provided in the aforementioned embodiment.

The above are only preferred embodiments of the present application and are not intended to limit the present application. Any modifications, equivalent substitutions, improvements, etc. made within the spirit and principles of the present application should fall within the protection scope of the present application.

## Claims

1. A focusing method, comprising:
obtaining image sharpness scores and code reading scores of a lens of a code reading camera at multiple positions, wherein the code reading scores are configured to characterize a code reading success rate of the code reading camera;
determining an optimal position of the lens according to the image sharpness scores and the code reading scores at the multiple positions; and
focusing according to the optimal position of the lens.

2. The method according to claim 1, wherein determining the optimal position of the lens according to the image sharpness scores and the code reading scores at the multiple positions, comprises:
determining at least one rough position of the lens from the multiple positions according to the image sharpness scores at the multiple positions;
determining the optimal position of the lens according to the at least one rough position of the lens and the code reading scores at the multiple positions; and
focusing according to the optimal position of the lens.

3. The method according to claim 2, wherein obtaining the image sharpness scores and the code reading scores of the lens of the code reading camera at the multiple positions, comprises:
obtaining an image sharpness score and a code reading score of the lens at a search starting position, wherein the search starting position is a travel starting position or a travel ending position of the lens, the travel starting position of the lens is a position where a vertical distance between the lens and a target surface of an object whose code is to be read is maximum, and the travel ending position of the lens is a position where the vertical distance between the lens and the target surface is minimum;
controlling the lens to move from the search starting position along a specified search direction with a specified search step size, wherein when the search starting position is the travel starting position of the lens, the specified search direction refers to a direction from the travel starting position to the travel ending positionof the lens; and when the search starting position is the travel ending position of the lens, the specified search direction refers to a direction from the travel ending position to the travel starting position of the lens; and
every time the lens moves the specified search step size, obtaining an image sharpness score and a code reading score after movement of the lens.

4. The method according to claim 3, wherein determining the at least one rough position of the lens from the multiple positions according to the image sharpness scores at the multiple positions, comprises:
during movement of the lens along the specified search direction, if already obtained multiple image sharpness scores show a trend of first increasing and then decreasing as the lens moves and a decrease ratio of a most recently obtained image sharpness score relative to a maximum value among the multiple image sharpness scores reaches a first threshold, determining whether a code reading score at a first position corresponding to the maximum value among the multiple image sharpness scores is greater than a second threshold; and
if the code reading score at the first position is greater than the second threshold, taking the first position as the rough position of the lens.

5. The method according to claim 2, wherein determining the at least one rough position of the lens from the multiple positions according to the image sharpness scores at the multiple positions, comprises:
drawing a relationship curve between the multiple positions and the image sharpness scores at the multiple positions;
obtaining at least one image sharpness score peak from the relationship curve;
from at least one position corresponding to the at least one image sharpness score peak, determining a second position where a corresponding code reading score is greater than a second threshold;
taking the determined second position as the at least one rough position of the lens.

6. The method according to claim 2, wherein determining the optimal position of the lens according to the at least one rough position of the lens and the code reading scores at the multiple positions, comprises:
determining a candidate search interval corresponding to each rough position, wherein the candidate search interval is a lens position interval centered on the rough position;
determining a local maximum code reading score within each candidate search interval from the code reading scores corresponding to respective positions comprised in the candidate search interval; and
determining the optimal position of the lens according to the local maximum code reading score within each candidate search interval.

7. The method according to claim 6, wherein determining the optimal position of the lens according to the local maximum code reading score within each candidate search interval, comprises:
if there is one candidate search interval and there is one position corresponding to the local maximum code reading score within the candidate search interval, taking the position corresponding to the local maximum code reading score within the candidate search interval as the optimal position of the lens;
if there is one candidate search interval and there are multiple positions corresponding to the local maximum code reading score within the candidate search interval, selecting a third position closest to a rough position corresponding to the candidate search interval from the multiple positions corresponding to the local maximum code reading score within the candidate search interval, and taking the third position as the optimal position of the lens; and
if there are multiple candidate search intervals, taking a maximum value among local maximum code reading scores within the multiple candidate search intervals as a global maximum value; if there is one position corresponding to the global maximum value, taking the position corresponding to the global maximum value as the optimal position of the lens; if there are multiple positions corresponding to the global maximum value, determining a distance between each position of the multiple positions corresponding to the global maximum value and a rough position corresponding to a candidate search interval where the position itself is located, and taking a position with a smallest distance from the rough position corresponding to the candidate search interval where the position itself is located as the optimal position of the lens.

8. The method according to claim 1, wherein focusing according to the optimal position of the lens, comprises:
determining a focusing movement direction and a movement distance of the lens according to the optimal position and a current position of the lens; and
driving the lens to move to the optimal position of the lens according to the focusing movement direction and the movement distance of the lens to complete focusing.

9. A focusing apparatus, comprising:
an obtaining module, configured for obtaining image sharpness scores and code reading scores of a lens of a code reading camera at multiple positions, wherein the code reading scores are configured to characterize a code reading success rate of the code reading camera;
a determining module, configured for determining an optimal position of the lens according to the image sharpness scores and the code reading scores at the multiple positions; and
a focusing module, configured for focusing according to the optimal position of the lens.

10. The apparatus according to claim 9, wherein the determining module comprises:
a first determining module, configured for determining at least one rough position of the lens from the multiple positions according to the image sharpness scores at the multiple positions; and
a second determining module, configured for determining the optimal position of the lens according to the at least one rough position of the lens and the code reading scores at the multiple positions;
the obtaining module is mainly configured for: obtaining an image sharpness score and a code reading score of the lens at a search starting position, wherein the search starting position is a travel starting position or a travel ending position of the lens, the travel starting position of the lens is a position where a vertical distance between the lens and a target surface of an object whose code is to be read is maximum, and the travel ending position of the lens is a position where the vertical distance between the lens and the target surface is minimum; controlling the lens to move from the search starting position along a specified search direction with a specified search step size, wherein when the search starting position is the travel starting position of the lens, the specified search direction refers to a direction from the travel starting position to the travel ending position of the lens; and when the search starting position is the travel ending position of the lens, the specified search direction refers to a direction from the travel ending position to the travel starting position of the lens; and every time the lens moves the specified search step size, obtaining an image sharpness score and a code reading score after movement of the lens;
the first determining module is mainly configured for: during movement of the lens along the specified search direction, if already obtained multiple image sharpness scores show a trend of first increasing and then decreasing as the lens moves and a decrease ratio of a most recently obtained image sharpness score relative to a maximum value among the multiple image sharpness scores reaches a first threshold, determining whether a code reading score at a first position corresponding to the maximum value among the multiple image sharpness scores is greater than a second threshold; and if the code reading score at the first position is greater than the second threshold, taking the first position as the rough position of the lens;
or, the first determining module is mainly configured for: drawing a relationship curve between the multiple positions and the image sharpness scores at the multiple positions; obtaining at least one image sharpness score peak from the relationship curve of the image sharpness scores; determining, from at least one position corresponding to the at least one image sharpness score peak, a second position where a corresponding code reading score is greater than a second threshold; taking the determined second position as the at least one rough position of the lens;
the second determining module is mainly configured for: determining a candidate search interval corresponding to each rough position, wherein the candidate search interval is a lens position interval centered on the rough position; determining a local maximum code reading score within each candidate search interval from the code reading scores corresponding to respective positions comprised in the candidate search interval; and determining the optimal position of the lens according to the determined local maximum code reading score;
the second determining module is mainly further configured for: if there is one candidate search interval and there is one position corresponding to the local maximum code reading score within the candidate search interval, taking the position corresponding to the local maximum code reading score within the candidate search interval as the optimal position of the lens; if there is one candidate search interval and there are multiple positions corresponding to the local maximum code reading score within the candidate search interval, selecting a third position closest to a rough position corresponding to the candidate search interval from the multiple positions corresponding to the local maximum code reading score within the candidate search interval, and taking the third position as the optimal position of the lens; and if there are multiple candidate search intervals, taking a maximum value among local maximum code reading scores within the multiple candidate search intervals as a global maximum value; if there is one position corresponding to the global maximum value, taking the position corresponding to the global maximum value as the optimal position of the lens; if there are multiple positions corresponding to the global maximum value, determining a distance between each position of the multiple positions corresponding to the global maximum value and a rough position corresponding to a candidate search interval where the position itself is located, and taking a position with a smallest distance from the rough position corresponding to the candidate search interval where the position itself is located as the optimal position of the lens; and
the focusing module is mainly configured for: determining a focusing movement direction and a movement distance of the lens according to the optimal position and a current position of the lens; and driving the lens to move to the optimal position of the lens according to the focusing movement direction and the movement distance of the lens to complete focusing.

11. A focusing apparatus, comprising a controlling unit, a motor, a lens, and a moving mechanism;
wherein the moving mechanism drives the lens to move in a direction perpendicular to a lens surface of the lens; and
the controlling unit is connected to the motor, and is configured to carry out the method according to any one of the claims 1-8 to control the motor to drive the moving mechanism, which in turn drives the lens to move, so as to complete focusing.

12. A computer-readable storage medium having computer program stored therein, wherein the computer programs when executed by a processor, carry out the method according to any one of claims 1-8.
